# EUROPEAN PATENT APPLICATION

(11) **EP 3 567 969 A1**
(43) Date of publication of application: **13.11.2019**
(21) Application number: 17890333.2
(22) Date of filing: 28.12.2017
(51) Int. Cl.: H04W 74/08, H04W 28/02

(54) **ACCESS METHOD AND ACCESS DEVICE**

(30) Priority: 05.01.2017 CN 201710008318
(71) Applicant: ZTE Corporation, Shenzhen, Guangdong 518057 (CN)
(72) Inventor: CHEN, Zhongming, Shenzhen Guangdong 518057 (CN); WU, Yumin, Shenzhen Guangdong 518057 (CN)
(74) Representative: Aipex B.V.
(86) International application number: PCT/CN2017/119590
(87) International publication number: WO 2018/126991

(57) **Abstract**

An access method and an access device are provided. The method includes: receiving, by a terminal, configuration information sent by a base station, and acquiring a preset access condition from the configuration information; and determining, by the terminal, whether the preset access condition is satisfied, and if the preset access condition is satisfied, implementing, by the terminal, a random access process through two interactions with the base station.

## Description

### TECHNICAL FIELD

The present invention relates to the technical field of communications and, in particular, to an access method and an access device.

### BACKGROUND

In a Long Term Evolution (LTE) system, before a user equipment (UE) in a connected state sends data to a base station, uplink synchronization and downlink synchronization with the base station need to be acquired. If the UE has performed measurement on a cell, it indicates that the downlink synchronization with the base station has been acquired, otherwise, the UE needs to perform a process similar to cell search to achieve the downlink synchronization with the base station. The uplink synchronization is achieved by executing a random access process. For example, the UE acquires a time advance (TA) sent by the base station, where the TA is mainly used by the UE to determine the moment of sending data. After the UE acquires the uplink synchronization, an uplink synchronization time alignment timer (TAT) is started. If the UE can receive the TA sent by the base station to the UE before the TAT expires, it is considered that the UE maintains the uplink synchronization with the base station. If the UE fails in receiving the TA sent by the base station to the UE after the TAT expires, it is considered that the UE loses the uplink synchronization. If the UE needs to send data to the base station after losing the uplink synchronization, the uplink synchronization is re-performed. Since the cell in the LTE system has merely one carrier, there is merely one TA. Each cell has a cell global identity (CGI), and the CGI may be sent through a system message.

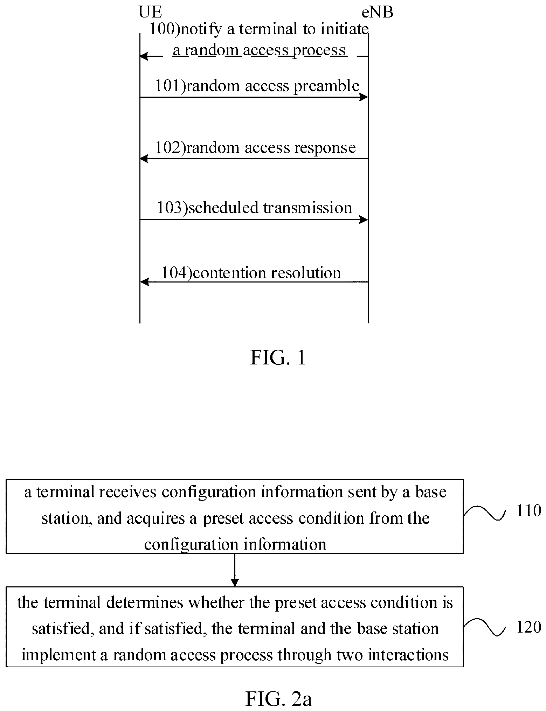

The random access process in the LTE system is shown in FIG. 1. The random access process may be initiated by a physical downlink control channel order (PDCCH order) or by a medium access control (MAC) layer of the UE, as shown in step 100 in FIG.1. Optionally, the PDCCH order or radio resource control (RRC) signaling may allocate a dedicated random access preamble to the UE, so that the random access process is in a non-contention-based manner. The dedicated random access preamble can merely be allocated by the base station and may be configured through the PDCCH order or a handover command. If no dedicated random access preamble is allocated to the UE, the UE needs to select a random access preamble; at this time, the random access process is in a contention-based manner, step 100 is not performed and the process proceeds to step 101 directly. The UE selecting a random access resource includes selecting the random access preamble, a time-frequency domain resource of a physical random access channel (PRACH) and the like. For the non-contention random access process, there is no contention resolution process since the dedicated preamble is allocated by a network side to the terminal. The contention-based random access process, as shown in FIG. 1, includes steps 101 to 104, where steps 103 and 104 are used for resolving the contention, while steps 103 and 104 do not need to be performed in the non-contention-based process.

In order to meet further higher, faster and newer communication requirements, the industry has begun to carry out researches on the 5G technology. The 5G technology will be further researched in terms of larger throughput, more user connections, lower latency, higher reliability, lower power consumption (including network side devices and user terminals) and the like. In order to reduce the access latency of the 5G, it is necessary to reduce time spent in the random access process.

### SUMMARY

The present invention provides an access method and an access device, which may reduce the time spent in the random access process and reduce the access latency.

The present invention provides an access method. The method may include steps described below:
receiving, by a terminal, configuration information sent by a base station, and acquiring, by the terminal, a preset access condition from the configuration information; and
determining, by the terminal, whether the preset access condition is satisfied, and if the preset access condition is satisfied, implementing, by the terminal, a random access process through two interactions with the base station.

The present invention provides an access device. The device may include a configuration information acquisition unit, a determination unit and an access unit.

The configuration information acquisition unit is configured to receive configuration information sent by a base station, and acquire a preset access condition from the configuration information.

The determination unit is configured to determine whether the preset access condition is satisfied currently.

The access unit is configured to, after the determination unit determines that the preset access condition is satisfied currently, implement a random access process through two interactions with the base station.

In the access method and the access device provided by the present invention, the terminal determines whether the preset access condition is satisfied, and if the preset access condition is satisfied, the terminal and the base station implement the random access process through two interactions, thereby reducing the access latency.

### BRIEF DESCRIPTION OF DRAWINGS

FIG. 1 is a flowchart of a random access process;
FIG. 2a is a flowchart of an access method according to an embodiment of the present invention;
FIG. 2b is a flowchart of an access method according to an embodiment 1 of the present invention;
FIG. 3 is a flowchart of an access method according to an embodiment 2 of the present invention;
FIG. 4 is a flowchart of an access method according to an embodiment 3 of the present invention;
FIG. 5 is a flowchart of an access method according to an embodiment 4 of the present invention;
FIG. 6 is a flowchart of an access method according to an embodiment 5 of the present invention; and
FIG. 7 is a block diagram of a terminal according to an embodiment 6 of the present invention.

### DETAILED DESCRIPTION

The steps illustrated in the flowcharts of the drawings may be performed by a computer system such as a group of computers capable of executing instructions. Although logical sequences are illustrated in the flowcharts, the illustrated or described steps may be performed in sequences different from those described herein in some cases.

An embodiment of the present invention provides an access method. As shown in FIG. 2a, the method may include the steps 110 and 120 described below.

In step 110, a terminal receives configuration information sent by a base station, and acquires a preset access condition from the configuration information.

In step 120, the terminal determines whether the preset access condition is satisfied currently, and if the preset access condition is satisfied currently, the terminal and the base station implement a random access process through two interactions. The random access process includes a contention-based random access process.

The terminal may acquire the configuration information from a system message.

The two interactions include that the terminal sends a message to the base station once and the base station sends a message to the terminal once. One implementation manner to complete the random access process through two interactions is: combining step 103 and step 104 shown in FIG. 1 into step 101 and step 102 to complete the random access process. Combining step 103 and step 104 into step 101 and step 102 specifically includes that the terminal performs step 103 simultaneously when performing step 101. For example, the terminal sends a preamble to the base station at a moment in a transmission time interval 1 (TTI1), and simultaneously sends a message 3 (msg3) to the base station, msg3 carrying, e.g., a radio resource control (RRC) connection establishment request message and terminal identity information. The base station receives the preamble sent by the terminal, and meanwhile receives the msg3 sent by the terminal. If the contention is resolved, the base station responds a msg2, i.e., a random access response (RAR) message to the terminal, and meanwhile responds a msg4, i.e., a contention resolution message to the terminal.

For the convenience of description in the subsequent embodiments, the manner of completing the random access process through two interactions is referred to as a two-step access approach. The random access process in related technology is referred to as a four-step access approach.

Optionally, the method further includes a step where if the terminal determines that the preset access condition is not satisfied currently, the terminal and the base station implement the random access process through more than two interactions. For example, one implementation manner of completing the random access process through more than two interactions is to complete the random access through the four-step access approach.

Optionally, the step where the terminal determines whether the preset access condition is satisfied currently includes:
determining whether a network is congested currently, and if the network is not congested currently, the preset access condition is satisfied; where the terminal may determine whether the current network is congested currently through network congestion indication in the received system message.

Optionally, the step where the terminal determines whether the preset access condition is satisfied currently includes:
determining whether a signal quality of a serving cell to which an access is to be initiated is higher than or equal to a specified signal quality threshold, and if a determination result is positive, the preset access condition is satisfied.

For example, a user equipment (UE) determines whether the signal quality of the serving cell to which the UE initiates an access is higher than or equal to the specified signal quality threshold. The specified signal quality threshold may include a first specified signal quality threshold and a second specified signal quality threshold.

If the terminal currently resides in but does not access the serving cell, the terminal determines whether the signal quality of the serving cell is higher than or equal to the first specified signal quality threshold.

If the terminal needs to re-access the serving cell after accessing the serving cell, the terminal determines whether the signal quality of the serving cell is higher than or equal to the second specified signal quality threshold.

The first specified signal quality threshold and the second specified signal quality threshold may be identical or different. In a case that both thresholds are identical, merely one specified signal quality threshold may be used.

Optionally, the step where the terminal determines whether the preset access condition is satisfied currently includes:
determining whether a size of data to be sent by the terminal is smaller than or equal to a specified data transmission threshold, and if a determination result is positive, the preset access condition is satisfied.

The specified data transmission threshold may include a first specified data transmission threshold and a second specified data transmission threshold.

If the terminal currently resides in but does not access the serving cell, the terminal determines whether the size of the data to be sent is smaller than or equal to the first specified data transmission threshold.

If the terminal needs to re-access the serving cell after accessing the serving cell, the terminal determines whether the size of the data to be sent is smaller than or equal to the second specified data transmission threshold.

The first specified data transmission threshold and the second specified data transmission threshold may be identical or different. In a case that both thresholds are identical, merely one specified data transmission threshold may be used.

Optionally, the step where the terminal determines whether the preset access condition is satisfied currently includes:
determining whether a data transmission interval for transmitting the data to be sent is larger than or equal to a specified data transmission interval, and if a determination result is positive, the preset access condition is satisfied.

The specified data transmission interval may include a first specified data transmission interval and a second specified data transmission interval.

If the terminal currently resides in but does not access the serving cell, the terminal determines whether the data transmission interval for transmitting the data to be sent is larger than or equal to the first specified data transmission interval.

If the terminal needs to re-access the serving cell after accessing the serving cell, the terminal determines whether the data transmission interval for transmitting the data to be sent is larger than or equal to the second specified data transmission interval.

The first specified data transmission interval and the second specified data transmission interval may be identical or different. In a case that both intervals are identical, merely one specified data transmission interval may be used.

Optionally, the step where the terminal determines whether the preset access condition is satisfied currently includes that:
the terminal determines whether configuration information of a corresponding signaling radio bearer (SRB), data radio bearer (DRB), evolved packet system bearer (EPS bearer), flow or packet data unit (PDU) session supports two-step access when the data sent by the base station arrives, and if a determination result is positive, the preset access condition is satisfied.

Optionally, the step where the terminal determines whether the preset access condition is satisfied currently includes that:
if the terminal acquires that a message 0 does not carry a dedicated preamble, determining whether time (e.g., a slot or a subframe) for receiving the message 0 satisfies a specified condition, and if a determination result is positive, the preset access condition is satisfied; or
if the terminal acquires that the message 0 does not carry the dedicated preamble but carries two-step access indication information, the preset access condition is satisfied.

Optionally, the determining whether the time for receiving the message 0 satisfies the specified condition includes:
determining whether the time for receiving the message 0 is odd, and if the time for receiving the message 0 is odd, the preset access condition is satisfied; or
determining whether the time for receiving the message 0 is even, and if the time for receiving the message 0 is even, the preset access condition is satisfied; or
determining whether the time for receiving the message 0 is a specified value, and if the time for receiving the message 0 is the specified value, the preset access condition is satisfied; for example, the specified value may be 2, 3, 4 or the like; the specified value here is merely exemplary and may be set according to requirements, which is not limited in the present application.

The above multiple determination manners may also be combined. For example, the preset access condition is satisfied only when the network is not congested and meanwhile the size of the data to be sent is smaller than or equal to the specified data transmission threshold; or the preset access condition is satisfied only when the signal quality of the serving cell to which the access is to be initiated is higher than or equal to the specified signal quality threshold and meanwhile the size of the data to be sent is smaller than or equal to the specified data transmission threshold. The combinations are merely examples, and other conditions may be combined, which is not limited in the present application.

By adopting the access method provided by the embodiment of the present invention, in a case that the preset access condition is satisfied, the terminal may access through two interactions, thereby greatly reducing the latency generated when the terminal accesses the 5G system.

In following embodiments, a first base station may be a 5G base station or an LTE enhanced base station, and the first base station is provided with a cell which is referred to as a first cell. The following embodiments are described by using the 5G base station as an example, and for the LTE enhanced base station, the process is similar.

### Embodiment 1

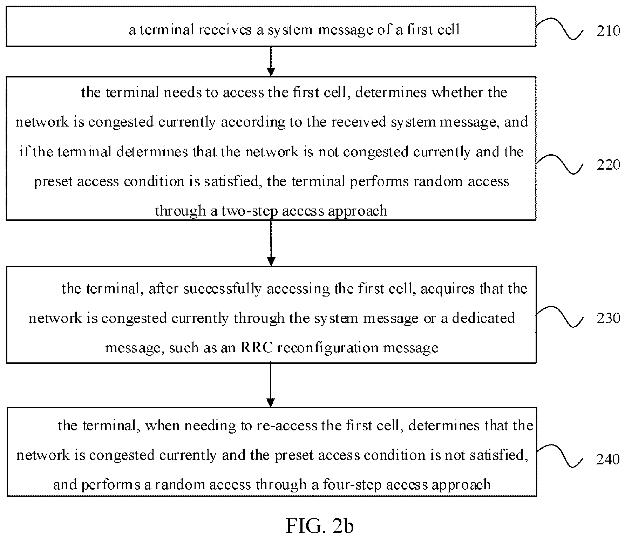

A terminal resides in a first cell, and the terminal is configured to determine whether a present access condition is satisfied according to whether a network is congested. As shown in Fig. 2b, an access method provided by the embodiment may include steps 210, 220, 230 and 240.

In step 220, the terminal receives a system message of the first cell.

In step 220, the terminal needs to access the first cell, determines whether the network is congested currently according to the received system message, and if the terminal determines that the network is not congested currently and the preset access condition is satisfied, the terminal performs random access through a two-step access approach.

In step 230, the terminal, after successfully accessing the first cell, acquires that the network is congested currently through the system message or a dedicated message, such as an RRC reconfiguration message.

In step 240, the terminal, when needing to re-access the first cell, determines that the network is congested currently and the preset access condition is not satisfied, and performs a random access through a four-step access approach.

For example, no matter whether the terminal accesses the first cell, a current network state of the cell may be determined by receiving the system message sent by the cell. If the current network state of the first cell is not congested, the random access is performed through the two-step access approach, and if the current network state of the first cell is congested, the random access is performed through the four-step access approach. Further for example, after the terminal successfully accesses the first cell, since the terminal does not perform a data interaction with the first cell within a period of time and then needs to re-accesses the first cell, the terminal acquires that the current network state of the first cell is congested through the system message or the dedicated message, and performs the random access through the four-step access approach.

### Embodiment 2

A terminal resides in a first cell. The terminal is configured to determine whether a present access condition is satisfied according to a signal quality of a serving cell to be accessed.

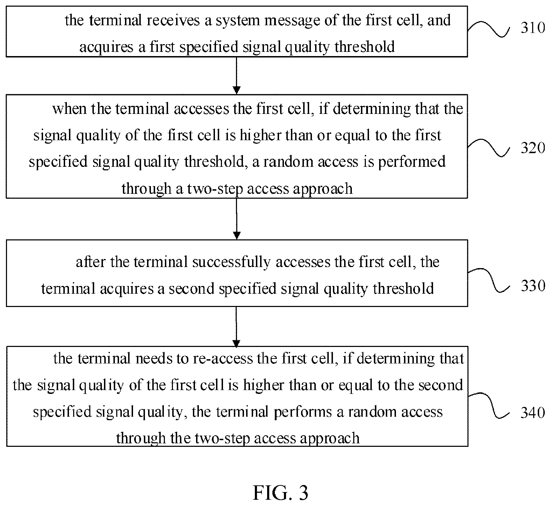

As shown in FIG. 3, in step 310, the terminal receives a system message of the first cell, and acquires a first specified signal quality threshold.

In step 320, when the terminal accesses the first cell, the terminal determines whether a signal quality of the serving cell (i.e., the first cell) to which the terminal needs to initiate an access is higher than or equal to the first specified signal quality threshold. In the embodiment, if the terminal needs to access the first cell and the signal quality of the first cell is higher than or equal to the first specified signal quality threshold, the preset access condition is satisfied, and a random access is performed through a two-step access approach.

In step 330, after the terminal successfully accesses the first cell, the terminal acquires a second specified signal quality threshold.

The second specified signal quality threshold may be acquired through the system message or a dedicated message such as an RRC reconfiguration message.

In step 340, the terminal needs to re-access the first cell, the terminal determines whether the signal quality of the serving cell (i.e., the first cell) to be accessed is higher than or equal to the second specified signal quality threshold. In the embodiment, if the signal quality of the first cell is higher than or equal to the second specified signal quality threshold, the terminal performs a random access through the two-step access approach.

### Embodiment 3

A terminal resides in a first cell. The terminal is configured to determine whether a present access condition is satisfied according to at least one of a size and a transmission mode of data to be sent.

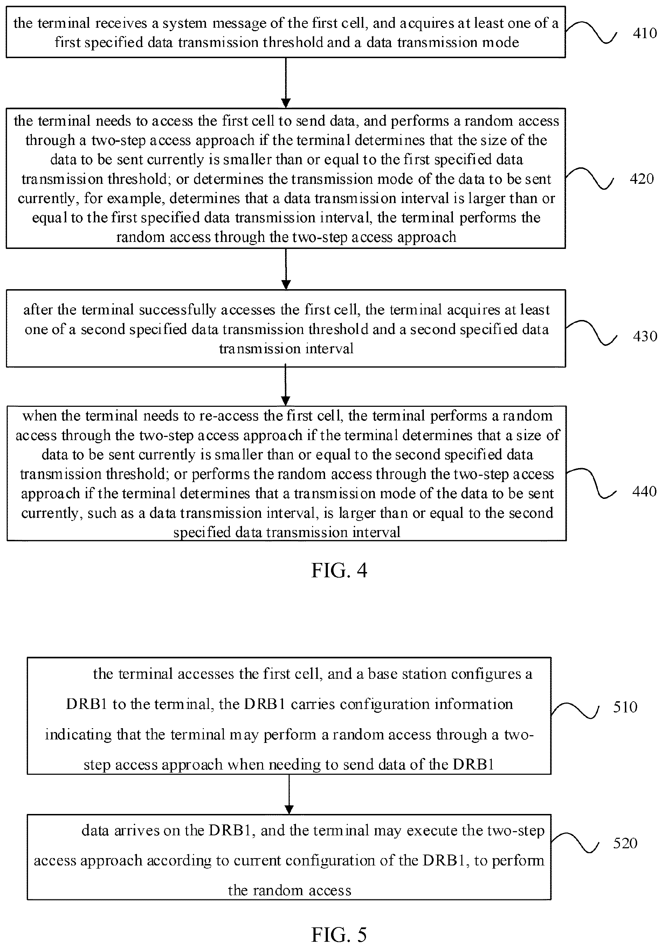

As shown in FIG. 4, in step 410, the terminal receives a system message of the first cell, and acquires at least one of a first specified data transmission threshold and a data transmission mode. For example, the data transmission mode may be a first specified data transmission interval.

In step 420, the terminal needs to access the first cell to send data, and performs a random access through a two-step access approach if the terminal determines that the size of the data to be sent currently is smaller than or equal to the first specified data transmission threshold. Alternatively, the terminal determines the transmission mode of the data to be sent currently, for example, determines that a data transmission interval is larger than or equal to the first specified data transmission interval, the terminal performs the random access through the two-step access approach.

In step 430, after the terminal successfully accesses the first cell, the terminal acquires at least one of a second specified data transmission threshold and a second specified data transmission interval.

At least one of the second specified data transmission threshold and the second specified data transmission interval may be acquired through the system message or a dedicated message such as an RRC reconfiguration message.

In step 440, when the terminal needs to re-access the first cell, the terminal performs a random access through the two-step access approach if the terminal determines that a size of data to be sent currently is smaller than or equal to the second specified data transmission threshold; or performs the random access through the two-step access approach if the terminal determines that a transmission mode of the data to be sent currently, such as a data transmission interval, is larger than or equal to the second specified data transmission interval.

Of course, alternatively, only if the size of the data to be sent is smaller than or equal to the second specified data transmission threshold and the transmission mode of the data to be sent, such as the data transmission interval, is larger than or equal to the second specified data transmission interval, the random access is performed through the two-step access approach.

### Embodiment 4

A terminal resides in a first cell. The terminal is configured to determine whether a present access condition is satisfied according to configuration of a corresponding radio bearer or other bearers when data arrives.

As shown in FIG. 5, in step 510, the terminal accesses the first cell, and a base station configures a DRB1 to the terminal. The DRB1 carries configuration information indicating that the terminal may perform a random access through a two-step access approach when needing to send data of the DRB1.

In step 520, data arrives on the DRB1, and the terminal may execute the two-step access approach according to current configuration of the DRB1, to perform the random access.

In the embodiment, the configuration capable of executing the two-step access approach may be configured on the DRB, or may be configured on an SRB, an EPS bearer, a flow or a PDU session, and the terminal may determine whether to initiate the two-step access approach according to related configuration information of the corresponding radio bearer or configuration information of the other corresponding bearers when the data arrives. For example, the configuration capable of executing the two-step access approach may be configured on the flow, and whether to initiate the two-step access approach is determined according to related configuration information of the flow corresponding to the DRB where the data arrives, which is similar to the determination on other configurations.

### Embodiment 5

A terminal resides in a first cell. The terminal is configured to determine whether a present access condition is satisfied according to time for receiving a message 0.

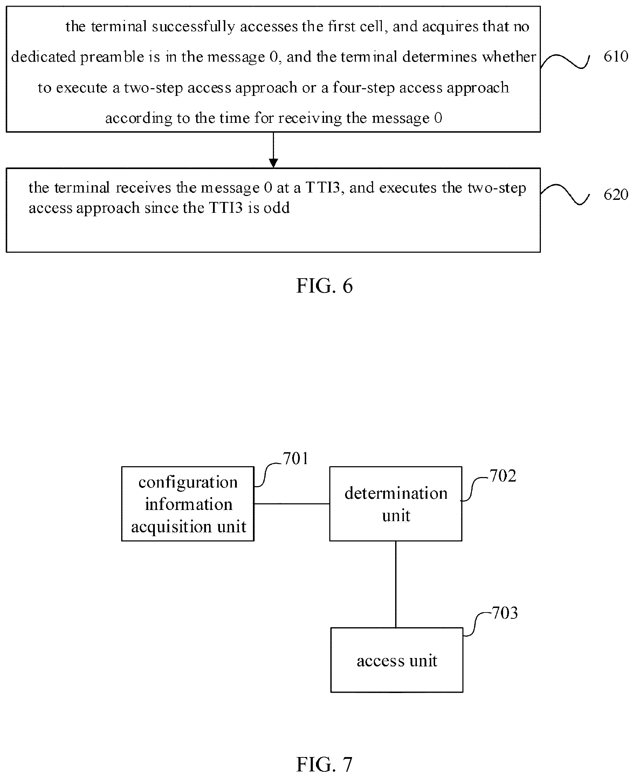

As shown in FIG. 6, in step 610, the terminal successfully accesses the first cell, and acquires that no dedicated preamble is in the message 0, and the terminal determines whether to execute a two-step access approach or a four-step access approach according to the time for receiving the message 0.

The terminal may acquire whether the message 0 has the dedicated preamble through a system message or a dedicated message such as an RRC reconfiguration message.

The time for receiving the message 0 may be a transmission time interval (TTI) for receiving the message 0, or a slot or a subframe for receiving the message 0. In an example, whether the present access condition is satisfied is determined according to the TTI for receiving the message 0.

In an example, the two-step access approach may be executed if the TTI for receiving the message 0 is odd, and the four-step access approach may be executed if the TTI is even.

In step 620, the terminal receives the message 0 which has no dedicated preamble, and the terminal receives the message 0 at a TTI3, and executes the two-step access approach since the TTI3 is odd.

In the above step 610, whether to execute the two-step access approach or the four-step access approach may be determined through an indication in the message 0. When the message 0 carries a two-step access indication, the two-step access approach is used; while if the message 0 does not carry the two-step access indication, the four-step access approach is used.

In the above step 610, the terminal may alternatively be configured to determine whether to execute the two-step access approach or the four-step access approach according to whether the time for receiving the message 0 is a specified value. For example, if the TTI at which the terminal receives the message 0 is the specified value, the two-step access approach is used; while if the TTI for receiving the message 0 is not the specified value, the four-step access approach is used. The specified value may be 2, 3, 4, 5 or the like. The specified value is merely exemplary herein, and may be set according to requirements.

### Embodiment 6

FIG. 7 is a block diagram of a terminal according to an embodiment of the present invention. As shown in FIG. 7, the terminal provided in the embodiment may include a configuration information acquisition unit 701, a determination unit 702 and an access unit 703.

The configuration information acquisition unit 701 is configured to receive configuration information sent by a base station, and acquire a preset access condition from the configuration information.

The determination unit 702 is configured to determine whether the preset access condition is satisfied currently.

The access unit 703 is configured to, after the determination unit 702 determines that the preset access condition is satisfied, implement a random access process through two interactions with the base station.

Optionally, the access unit 703 is further configured to, when the determination unit 702 determines that the preset access condition is not satisfied currently, implement a random access process through more than two interactions with the base station.

Optionally, the determination unit 702 is configured to determine whether the preset access condition is satisfied through at least one of following manners:
determining whether a network is congested currently, and if the network is not congested,
determining that the preset access condition is satisfied;
determining whether a signal quality of a serving cell to which an access is to be initiated is higher than or equal to a specified signal quality threshold, and if a determination result is positive, determining that the preset access condition is satisfied;
determining whether a size of data to be sent is smaller than or equal to a specified data transmission threshold, and if a determination result is positive, determining that the preset access condition is satisfied;
determining whether a transmission interval for data to be sent is larger than or equal to a specified data transmission interval, and if a determination result is positive, determining that the preset access condition is satisfied;
determining whether configuration information of a corresponding signaling radio bearer, data radio bearer, evolved packet system bearer, flow or packet data unit session supports a two-step access when the data arrives, and if a determination result is positive, determining that the preset access condition is satisfied;
in case of acquiring that a message 0 does not carry a dedicated preamble, determining whether time for receiving the message 0 satisfies a specified condition, and if a determination result is positive, the preset access condition is satisfied; and
in case of acquiring that the message 0 does not carry the dedicated preamble, if the message 0 carries two-step access indication information, determining that the preset access condition is satisfied.

Optionally, the determination unit 702 is configured to:
if a terminal resides in but does not access the serving cell, determine whether the signal quality of the serving cell is higher than or equal to a first specified signal quality threshold; and
if the terminal needs to re-access the serving cell after accessing the serving cell, determine whether the signal quality of the serving cell is higher than or equal to a second specified signal quality threshold.

Optionally, the determination unit 702 is configured to:
if a terminal resides in but does not access the serving cell, determine whether the size of the data to be sent is smaller than or equal to a first specified data transmission threshold; and
if the terminal needs to re-access the serving cell after accessing the serving cell, determine whether the size of the data to be sent is smaller than or equal to a second specified data transmission threshold.

Optionally, the determination unit 702 is configured to:
if a terminal resides in but does not access the serving cell, determine whether the data transmission interval for transmitting the data to be sent is larger than or equal to a first specified data transmission interval; and
if the terminal needs to re-access the serving cell after accessing the serving cell, determine whether the data transmission interval for transmitting the data to be sent is larger than or equal to a second specified data transmission interval.

Optionally, the determination unit 702 is configured to:
determine whether the time for receiving the message 0 is odd, and if a determination result is positive, determine that the preset access condition is satisfied;
determine whether the time for receiving the message 0 is even, and if a determination result is positive, determine that the preset access condition is satisfied; or
determine whether the time for receiving the message 0 is a specified value, and if a determination result is positive, determine that the preset access condition is satisfied.

## Claims

1. An access method, comprising:
receiving, by a terminal, configuration information sent by a base station, and acquiring, by the terminal, a preset access condition from the configuration information; and
determining, by the terminal, whether the preset access condition is satisfied, and if the preset access condition is satisfied, implementing, by the terminal, a random access process through two interactions with the base station.

2. The access method of claim 1, after determining, by the terminal, whether the preset access condition is satisfied, further comprising: in case of determining by the terminal that the preset access condition is not satisfied, implementing, by the terminal, a random access process through more than two interactions with the base station.

3. The access method of claim 1, wherein determining, by the terminal, whether the preset access condition is satisfied comprises at least one of:
determining whether a network is congested, and if the network is not congested, determining that the preset access condition is satisfied;
determining whether a signal quality of a serving cell to which an access is to be initiated is higher than or equal to a specified signal quality threshold, and if the signal quality of the serving cell to which the access is to be initiated is higher than or equal to the specified signal quality threshold, determining that the preset access condition is satisfied;
determining whether a size of data to be sent is smaller than or equal to a specified data transmission threshold, and if the size of the data to be sent is smaller than or equal to the specified data transmission threshold, determining that the preset access condition is satisfied;
determining whether a data transmission interval for transmitting data to be sent is larger than or equal to a specified data transmission interval, and if the data transmission interval for transmitting the data to be sent is larger than or equal to the specified data transmission interval, determining that the preset access condition is satisfied;
determining whether configuration information of a corresponding signaling radio bearer, data radio bearer, evolved packet system bearer, flow or packet data unit session supports two-step access when data arrives, and if the configuration information supports the two-step access, determining that the preset access condition is satisfied;
in case of acquiring by the terminal that a message 0 does not carry a dedicated preamble, determining whether time for receiving the message 0 satisfies a specified condition, and if the time for receiving the message 0 satisfies the specified condition, determining that the preset access condition is satisfied; and
in case of acquiring by the terminal that the message 0 does not carry the dedicated preamble, if the message 0 carries two-step access indication information, determining that the preset access condition is satisfied.

4. The access method of claim 3, wherein determining whether the signal quality of the serving cell to which the access is to be initiated is higher than or equal to the specified signal quality threshold comprises:
if the terminal resides in but does not access the serving cell, determining whether the signal quality of the serving cell is higher than or equal to a first specified signal quality threshold; and
if the terminal needs to re-access the serving cell after accessing the serving cell, determining whether the signal quality of the serving cell is higher than or equal to a second specified signal quality threshold.

5. The access method of claim 3, wherein determining whether the size of the data to be sent is smaller than or equal to the specified data transmission threshold comprises:
if the terminal resides in but does not access the serving cell, determining whether the size of the data to be sent is smaller than or equal to a first specified data transmission threshold; and
if the terminal needs to re-access the serving cell after accessing the serving cell, determining whether the size of the data to be sent is smaller than or equal to a second specified data transmission threshold.

6. The access method of claim 3, wherein determining whether the data transmission interval for transmitting the data to be sent is larger than or equal to the specified data transmission interval comprises:
if the terminal resides in but does not access the serving cell, determining whether the data transmission interval for transmitting the data to be sent is larger than or equal to a first specified data transmission interval; and
if the terminal needs to re-access the serving cell after accessing the serving cell, determining whether the data transmission interval for transmitting the data to be sent is larger than or equal to a second specified data transmission interval.

7. The access method of claim 3, wherein determining whether the time for receiving the message 0 satisfies the specified condition comprises at least one of:
determining whether the time for receiving the message 0 is odd, and if the time for receiving the message 0 is odd, determining that the preset access condition is satisfied;
determining whether the time for receiving the message 0 is even, and if the time for receiving the message 0 is even, determining that the preset access condition is satisfied; and
determining whether the time for receiving the message 0 is a specified value, and if the time for receiving the message 0 is the specified value, determining that the preset access condition is satisfied.

8. An access device, comprising:
a configuration information acquisition unit, which is configured to receive configuration information sent by a base station, and acquire a preset access condition from the configuration information;
a determination unit, which is configured to determine whether the preset access condition is satisfied; and
an access unit, which is configured to, after the determination unit determines that the preset access condition is satisfied, implement a random access process through two interactions with the base station.

9. The access device of claim 8, wherein the access unit is further configured to, after the determination unit determines that the preset access condition is not satisfied, implement a random access process through more than two interactions with the base station.

10. The access device of claim 8, wherein the determination unit is configured to determine whether the preset access condition is satisfied through at least one of:
determining whether a network is congested, and if the network is not congested, determining that the preset access condition is satisfied;
determining whether a signal quality of a serving cell to which an access is to be initiated is higher than or equal to a specified signal quality threshold, and if the signal quality of the serving cell to which the access is to be initiated is higher than or equal to the specified signal quality threshold, determining that the preset access condition is satisfied;
determining whether a size of data to be sent is smaller than or equal to a specified data transmission threshold, and if the size of the data to be sent is smaller than or equal to the specified data transmission threshold, determining that the preset access condition is satisfied;
determining whether a data transmission interval for transmitting data to be sent is larger than or equal to a specified data transmission interval, and if the data transmission interval for transmitting the data to be sent is larger than or equal to the specified data transmission interval, determining that the preset access condition is satisfied;
determining whether configuration information of a corresponding signaling radio bearer, data radio bearer, evolved packet system bearer, flow or packet data unit session supports two-step access when data arrives, and if the configuration information supports the two-step access, determining that the preset access condition is satisfied;
in case of acquiring that a message 0 does not carry a dedicated preamble, determining whether time for receiving the message 0 satisfies a specified condition, and if the time for receiving the message 0 satisfies the specified condition, determining that the preset access condition is satisfied; and
in case of acquiring that the message 0 does not carry the dedicated preamble, if the message 0 carries two-step access indication information, determining that the preset access condition is satisfied.

11. The access device of claim 10, wherein the determination unit is configured to:
if a terminal resides in but does not access the serving cell, determine whether the signal quality of the serving cell is higher than or equal to a first specified signal quality threshold; and
if the terminal needs to re-access the serving cell after accessing the serving cell, determine whether the signal quality of the serving cell is higher than or equal to a second specified signal quality threshold.

12. The access device of claim 10, wherein the determination unit is configured to:
if a terminal resides in but does not access the serving cell, determine whether the size of the data to be sent is smaller than or equal to a first specified data transmission threshold; and
if the terminal needs to re-access the serving cell after accessing the serving cell, determine whether the size of the data to be sent is smaller than or equal to a second specified data transmission threshold.

13. The access device of claim 10, wherein the determination unit is configured to:
if a terminal resides in but does not access the serving cell, determine whether the data transmission interval for transmitting the data to be sent is larger than or equal to a first specified data transmission interval; and
if the terminal needs to re-access the serving cell after accessing the serving cell, determine whether the data transmission interval for transmitting the data to be sent is larger than or equal to a second specified data transmission interval.

14. The access device of claim 10, wherein the determination unit is configured to determine whether the time for receiving the message 0 satisfies the specified condition through at least one of:
determining whether the time for receiving the message 0 is odd, and if the time for receiving the message 0 is odd, determining that the preset access condition is satisfied;
determining whether the time for receiving the message 0 is even, and if the time for receiving the message 0 is even, determining that the preset access condition is satisfied; and
determining whether the time for receiving the message 0 is a specified value, and if the time for receiving the message 0 is the specified value, determining that the preset access condition is satisfied.
